Europäisches Patentamt

European Patent Office

Office européen des brevets

(19)

(11) Numéro de publication: **0 229 544**
**B1**

## (12) FASCICULE DE BREVET EUROPEEN

(45) Date de publication du fascicule du brevet:
**31.01.90**

(51) Int. Cl.⁴: **H02G 3/04**

(21) Numéro de dépôt: **86402560.6**

(22) Date de dépôt: **19.11.86**

(54) Réalisation de structures de supportage et de guidage de cables électriques.

(30) Priorité: **27.11.85 FR 8517499**

(43) Date de publication de la demande:
**22.07.87 Bulletin 87/30**

(45) Mention de la délivrance du brevet:
**31.01.90 Bulletin 90/5**

(84) Etats contractants désignés:
**AT BE CH DE ES FR GB GR IT LI LU NL SE**

(56) Documents cités:
**FR-A- 2 017 070**
**FR-A- 2 208 219**
**FR-A- 2 550 813**

**ELEKTROTECHNIK,**
**vol. 53, no. 12, 16 juin 1971, pages 36-44, Würzburg, DE;**
**A. HERHAHN: "Viel Neues bie Kabel, Leitungen,**
**Zubehör"**

(73) Titulaire: **TOLARTOIS S.A., Avenue de la Ferme du Roi BP 213, F-62404 Bethune Cedex(FR)**

(72) Inventeur: **Tarnus, André, La Buissonnière Drouvin Le Marais, F-62131 Verquin(FR)**

(74) Mandataire: **Ecrepont, Robert, Cabinet Ecrepont 12 Place Simon Vollant, F-59800 Lille(FR)**

## Description

La présente invention concerne la réalisation de structures de supportage et de guidage de cables électriques, cables bus informatique, réseaux cablés, fibres optiques et toutes canalisations souples ou similaires.

Il existe de nombreuses structures de supportage de cables électriques, du type gouttières ou goulottes appelés couramment chemins ou échelles à cables.

Elles sont habituellement métalliques et réalisées à partir de tôles perforées ou d'éléments découpés (FR-A-I.368.2IO) ou en constructions mécano-soudées à parois grillagées (US-A-3.O4I.35I).

Il s'agit alors de structures lourdes surtout orientées vers la pose de cables électriques dans des ensembles industriels. Des versions plus légères sont néanmoins connues.

Elles sont formées par des fils longitudinaux sur lesquels des fils transversaux judicieusement coudés sont soudés (US-A-2.89I.757).

Ces structures sont néanmoins peu adaptées à la distribution d'énergie électrique, téléphone, cables coaxiaux informatique ou similaires dans des ensembles tertiaires.

En effet, ces goulottes nécessitent la réalisation en usine de pièces spécifiques et surtout de nombreux accessoires de pose.

En outre, ils obligent à des études préalables des cheminements de l'installation.

Chaque accessoire n'étant établi qu'en fonction de son rôle propre, il en résultait un prix de revient élevé, une structure lourde et un montage peu souple, se prêtant mal aux modifications des circuits consécutives aux évolutions des moyens technologiques de transferts d'énergie et de la communications (réseaux cablés).

On connaît également des structures constituées par pliage d'une nappe de fils de chaîne et de fils de trame réalisant des mailles rectangulaires (FR-A-2.OI7.O7O, DE-U-I98.922 et FR-A-2.2O8.2I9)

Chaque structure telle une goulotte est alors obtenue par découpage dans la nappe maillée d'un flan qui est ensuite plié à la forme requise et par exemple en forme de cornière en U, d'oméga ou de tout autre profil simple.

Le matériel de découpage et de pliage pouvant étre amené à proximité du chantier de l'installation, cela permet de fabriquer sur place les structures au fur et à mesure de l'expression des besoins.

Si, de ce fait, ces structures sont en elles-mêmes satisfaisantes, malheureusement pour leur fixation par exemple à une paroi ou pour la fixation sur elles-mêmes d'accessoires, ces structures ne se suffisent jamais d'une boulonnerie standard et requièrent des berceaux (DE-U-I98.922) ou des colliers ou des éclisses (FR-A-2.OI7.O7O et 2.2O8.2I9), tous aussi complexes. L'invention a pour but de remédier à ces inconvénients.

A cet effet, elle a pour objet une structure du type précité notamment caractérisée en ce que les fils de chaine et les fils de trame sont répartis dans la nappe de manière telle que la nappe qui constitue la structure :

- d'une part, présente des mailles principales qui sont délimitées de chaque côté par un groupe de deux fils délimitant entre eux des mailles secondaires et,
- d'autre part, respecte une certaine modularité longitudinale et transversale et enfin,
- possède pour une même nappe maillée :
. des dimensions de fils de chaine et de trame,
. des entraxes de fils de chaine et de fils de trame et donc
. des modules de chaine et de trame,
qui sont parfaitement définis et constants.

Pour mieux comprendre l'objet et les nombreuses qualités et avantages de la structure présentée, des exemples de réalisation vont maintenant être décrits en se référant aux dessins annexés qui représentent :

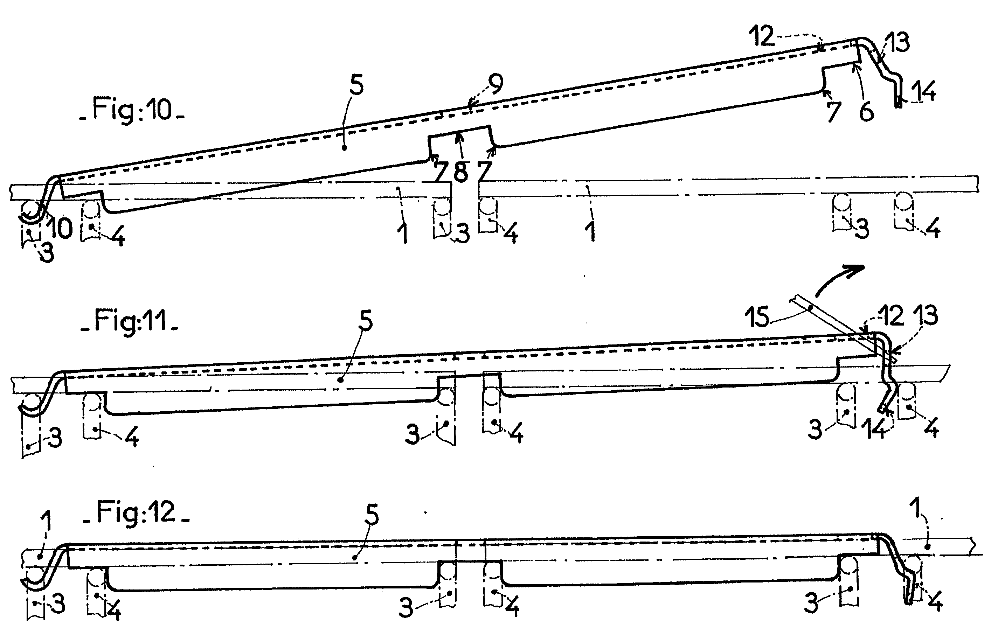

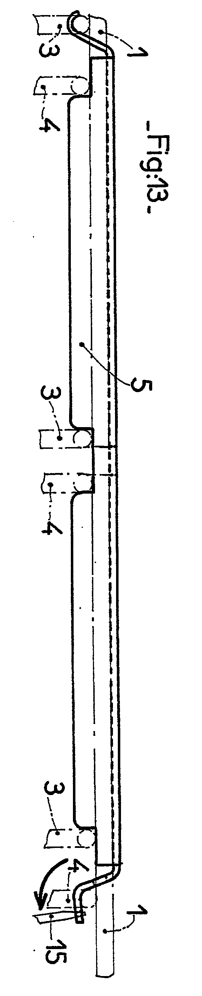

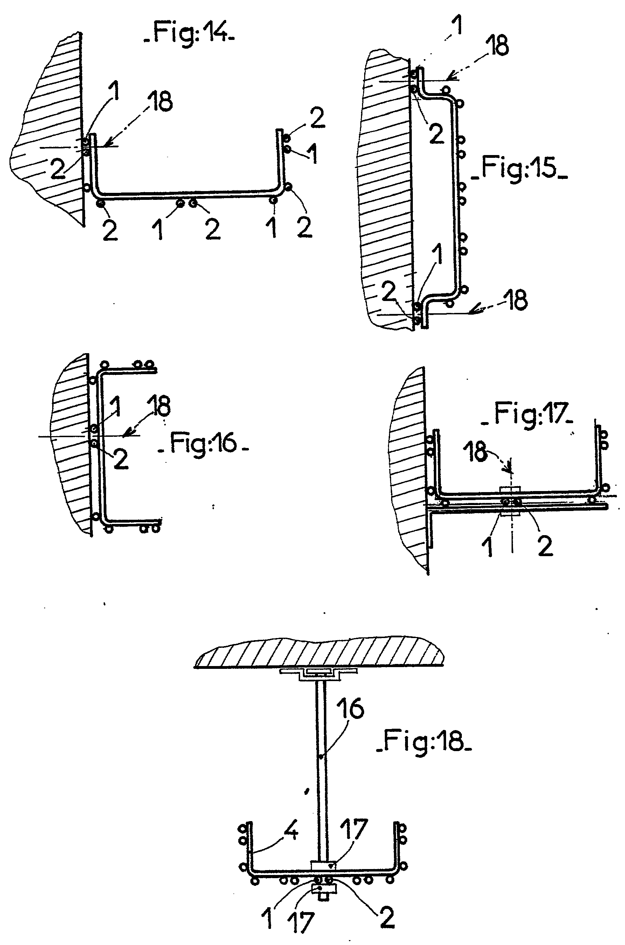

- figure I : en vue en plan, la nappe métallique maillée dans laquelle seront débités les flans nécessaires à la confection des structures supports de cables,
- figure 2 : en vue de profil, la nappe métallique maillée,
- figure 3 : en vue en plan, un détail de la nappe métallique maillée,
- figures 4, 5, 6, 7 : en vue de profil, différents types de structures réalisées dans la nappe métallique maillée par un découpage et pliage respectant la modularité,
- figure 8 : en vue en élévation, une éclisse permettant par simple clipsage le raccordement des extrémités des structures,
- figures 9a et 9b : en vue en élévation et de dessous, une éclisse réalisée en acier à ressort,
- figure 9c : une coupe selon A-A de la figure 9a
- figures IO, II, I2, I3 : en vue en élévation les différentes positions de l'éclisse au moment de son montage et de son clipsage sur les extrémités des structures à raccorder,
- figures I4, I5, I6, I7, I8 : en vue de profil, différentes structures fixées respectivement sur un mur, une console et un plafond par boulonnerie standard,
- figures I9, 2O, 2I, 22 : en vue de profil, des structures auxquelles, par de la visserie standard, des accessoires sont fixés et notamment :
. figure I9 : une cornière de séparation "courants forts et courants faibles",
. figure 2O : des colliers à talon fixant eux-mêmes des cables ou canalisations,
. figures 2I-22 : des matériels spécifiques : éclairage, haut parleur, caméra vidéo ...

Tous ces exemples ne sont pas limitatifs.

La nappe de préférence métallique à partir de laquelle sont réalisées les structures support de cables du type goulotte, gouttière, chemin de cable est, telle que représentée figures I, 2, 3, constituée de fils I, 2 disposés longitudinalement, appelés fils de chaine, qui ont en section une certaine dimension $D_C$, auxquels sont ajoutés orthogonalement, par exemple par superposition et assemblés à chaque intersection, par exemple par soudage, des fils disposés transversalement, appelés fils de trame qui ont en section une certaine dimension $D_T$.

La section des fils peut être circulaire ou de tout autre forme. Selon une caractéristique de l'invention, les fils de chaîne 1, 2 et de trame 3, 4 sont répartis de manière telle que la nappe présente des mailles principales $M_1$ qui sont délimitées de chaque côté par un groupe de deux fils délimitant entre eux des mailles secondaires $M_2$, $M_3$, $M_4$.

Selon une autre caractéristique de l'invention, la nappe de mailles obtenue respecte une certaine modularité longitudinale et transversale dont par exemple toutes les cotes sont définies d'axe en axe des fils ou d'un côté à un même côté des fils. La modularité longitudinale est définie par la répétitivité de la disposition des fils de trame 3 et 4 :

- si l'entraxe des fils de trame successifs 3 et 4 délimitant la longueur de la maille secondaire $M_4$ ou $M_3$ a une valeur $C_1$ et
- si l'entraxe des fils de trame successifs 4 et 3 délimitant la longueur de la maille principale $M_1$ a une valeur $C_2$,

on peut alors dire que le module longitudinal ou module de chaîne qui correspond à l'entraxe d'un fil de trame 3 au même fil 3 de la maille suivante a une valeur $C_1 + C_2$ égale à C.

De même, la modularité transversale est définie par la répétitivité de la disposition des fils de chaine 1 et 2 :

- si l'entraxe des fils de chaîne successifs 1 et 2 délimitant la largeur de la maille secondaire $M_4$ ou $M_2$ a une valeur $T_1$ et
- si l'entraxe des fils de chaine successifs 2 et 1 délimitant la largeur de la maille principale $M_1$ a une valeur $T_2$,

on peut alors dire que le module transversal ou module de trame qui correspond à l'entraxe d'un fil 1 de chaine au même fil 1 de chaine de la maille suivante a une valeur $T_1 + T_2$ égale à T.

Pour une même nappe maillée, sont parfaitement définis et constants :
- les dimensions des fils de chaine et de trame $D_C$ et $D_T$,
- les entraxes $C_1$, $C_2$ des fils de chaine et $T_1$, $T_2$ des fils de trame et donc,
- les modules de chaine C et de trame T.

On peut réaliser des nappes maillées et donc des structures ayant des caractéristiques techniques spécifiques en faisant varier la nature des métaux et même des matériaux de base, ainsi que les valeurs dimensionnelles ci-dessus définies ($D_C$, $D_T$, C, $C_1$, $C_2$, T, $T_1$, $T_2$) ce qui permet l'optimisation constante au problème techique à résoudre.

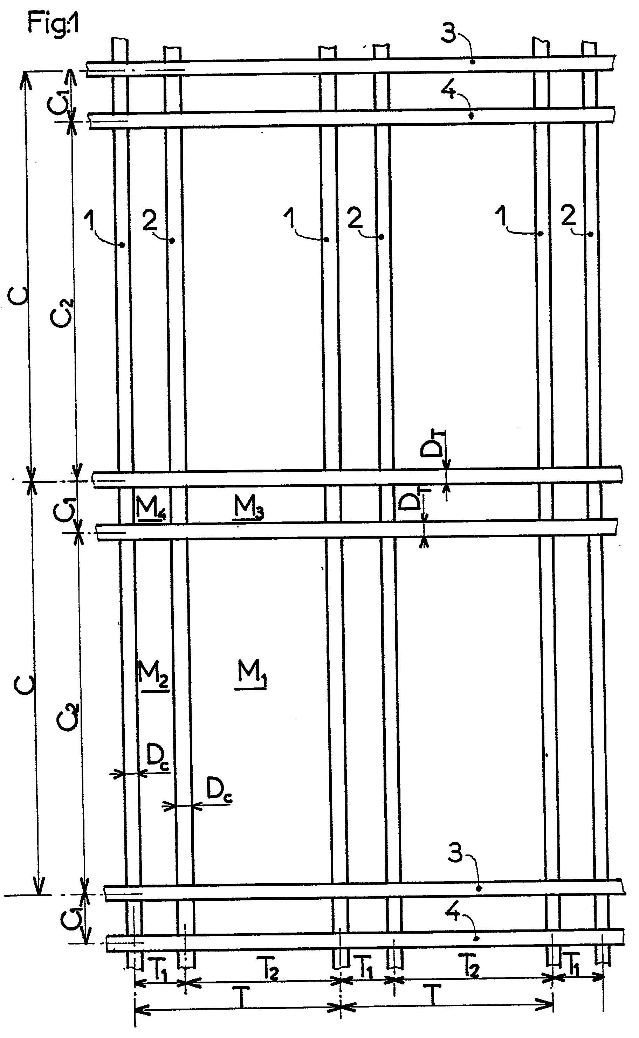

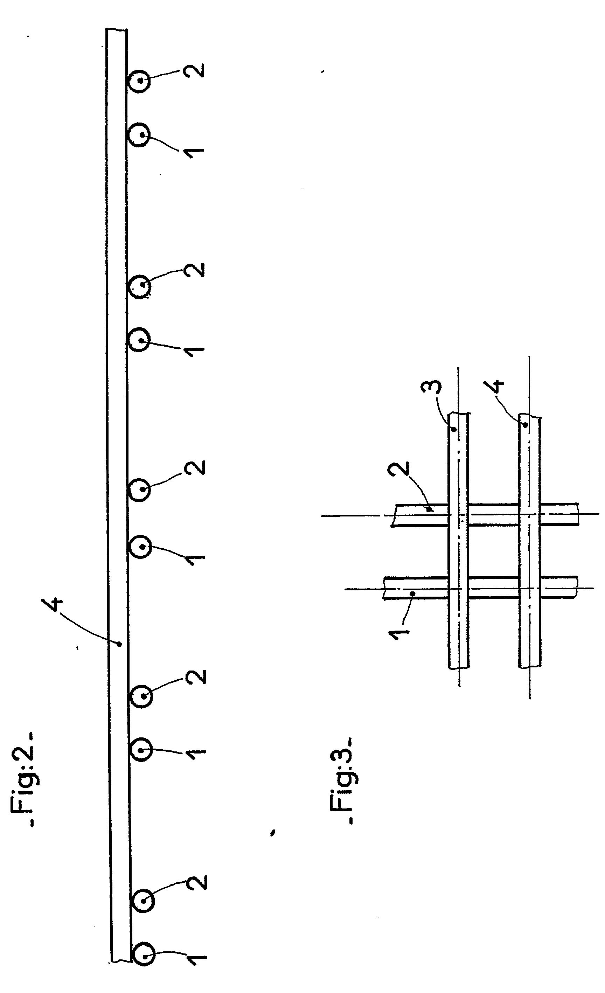

Comme évoqué plus haut, les intersections des fils de chaine 1 et 2 et de trame 3, 4 représentées en figure 3 créent des mailles secondaires $M_4$ assimilables à un trou rectangulaire ou carré ayant pour côtes celles de l'entraxe $C_1$ ou $T_1$ des fils correspondants diminué de la dimension transversale $D_T$ ou $D_C$ des fils.

Cette répétitivité de mailles secondaires assimilables à des trous permettra, à toutes les structures qui seront réalisées avec cette nappe, d'être fixées par simple boulonnerie du commerce, sans aucun accessoire spécifique.

A partir de la nappe maillée telle que décrite, on peut, par simple cisaillage pliage, obtenir des structures telles des goulottes de différents profils et sections.

De préférence, le cisaillage s'effectue au long des fils de chaine 1 ou 2 ou de trame 3 ou 4 de manière à isoler un flan dont la largeur corresponde à plusieurs fois, selon le sens de ces mailles, le module transversal ou longitudinal majoré d'une fois l'écartement $T_1$ ou $C_1$ des fils délimitant dans le sens considéré les mailles secondaires $M_4$.

De cette façon, les bords longitudinaux des flans et donc des structures portent chacun les doubles fils et présentent donc les mailles secondaires $M_4$ favorisant la fixation des dites structures.

De même, de préférence, les traces de pliage sont positionnées entre les fils délimitant des mailles secondaires $M_4$ ou principales $M_1$ et par exemple, sur l'axe de ces mailles.

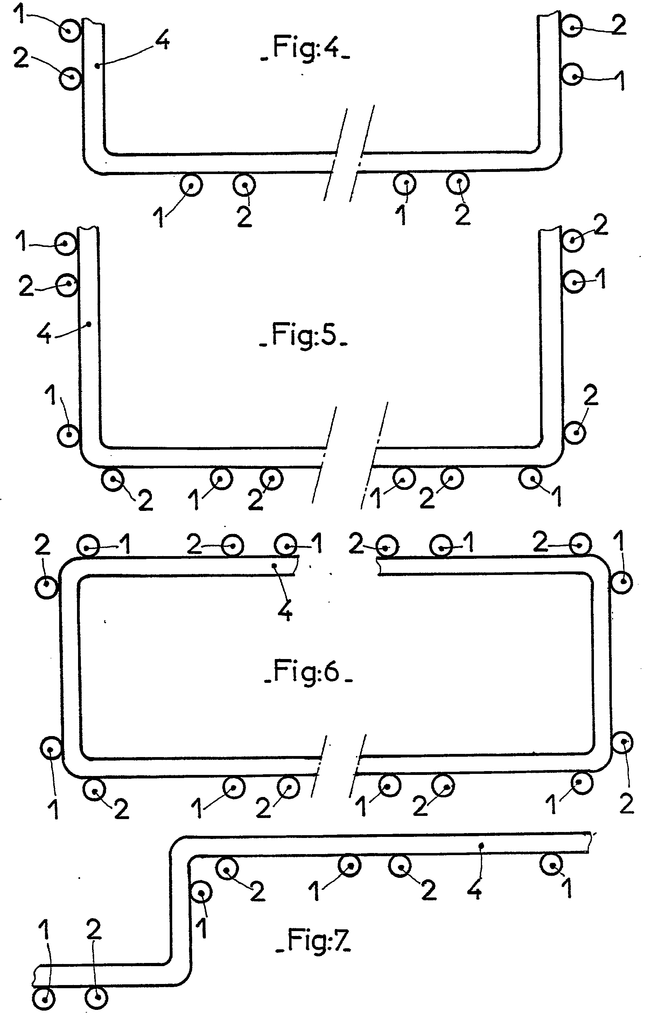

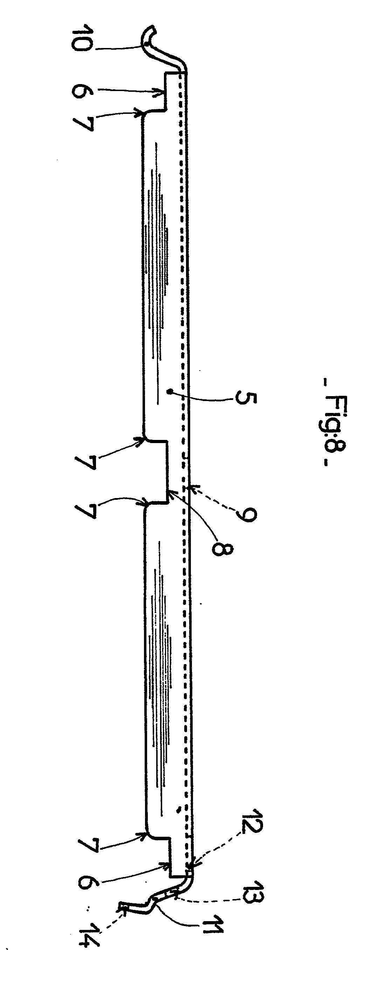

De nombreux exemples non limitatifs sont représentés aux figures 4 à 7.

La modularité de conception qui préside à l'obtention des structures permet à chacune de leurs extrémités de se raccorder facilement avec une structure semblable pour réaliser une structure plus importante.

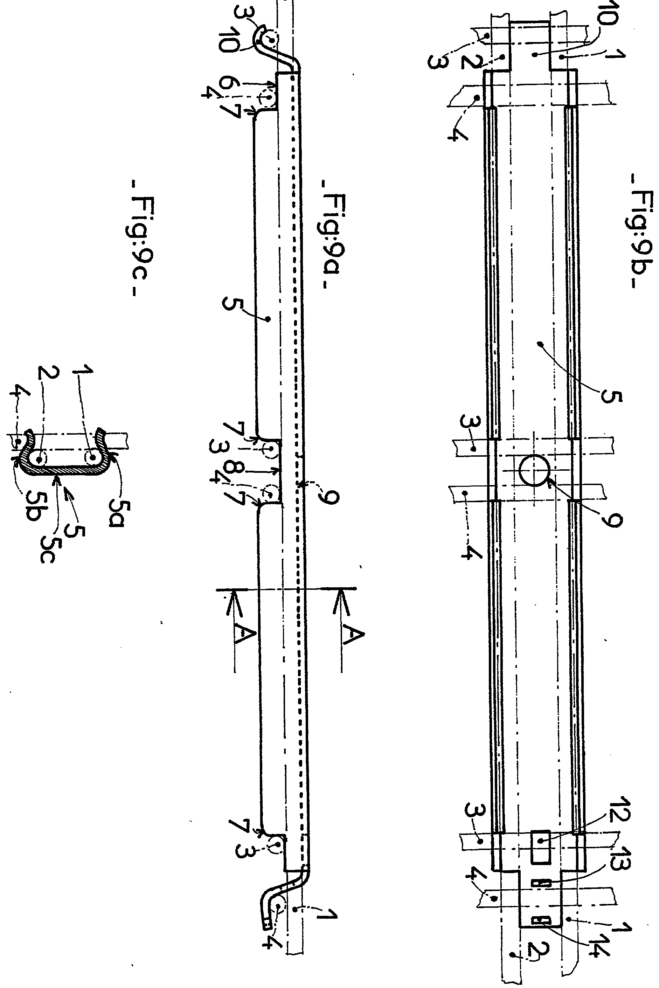

Chaque structure a par exemple, figures 8 et 9, son extrémité transversale coupée, l'une au long d'un fil de trame 3 ou 4, l'autre au long de l'autre fil de trame 4 ou 3, de manière à éviter la présence des mailles secondaires afin que le raccordement se fasse, sans superposition, en alignant une extrémité avec l'autre et en les assemblant à l'aide d'éclisses 5 parallèles à la direction longitudinale de la structure.

Chaque éclisse 5 est de préférence métallique. Elle est réalisée par découpage et pliage. Elle a un profil transversal en U permettant à ses ailes $5_a$, $5_b$ d'assurer, par élasticité, l'emprisonnement des fils de chaine 1 et 2 délimitant les mailles secondaires qui, sur les éléments de structures à assembler, sont dans le prolongement l'une de l'autre.

L'éclisse 5 comporte dans ses ailes $5_a$, $5_b$ un grugeage central 8 permettant le contournement et l'emprisonnement des fils d'extrémité 3, 4 des structures à raccorder.

Ce grugeage préserve une certaine hauteur des ailes $5_a$, $5_b$ afin de leur conserver une bonne rigidité.

L'éclisse 5 comporte également à chaque extrémité de ses ailes $5_a$, $5_b$ un grugeage 6 qui dégage le passage des fils respectifs de trame 3, 4 délimitant le bord opposé des mailles principales $M_1$ des extrémités des structures à raccorder ; l'âme $5_c$ de l'éclisse se poursuit pour permettre la fixation de l'éclisse. Des arrondis 7 raccordent l'entrée de chaque grugeage 6 et 8 au bord des ailes $5_a$, $5_b$ afin de faciliter l'engagement des ailes de l'éclisse 5 dans les mailles.

Pour la fixation de l'éclisse 5, à l'une de ses extrémités, l'âme $5_c$ de la dite éclisse 5 se prolonge par une patte arrondie 10 qui permet d'emprisonner un fil de trame 3.

A son autre extrémité, l'âme 5 de la dite éclisse comprend une patte 11 qui, avant montage, est provisoirement rabattue pour s'engager entre les fils d'un même groupe et qui, après mise en place de l'éclisse, pourra être relevée afin de permettre l'emprisonnement du fil de trame 4 correspondant.

Elle comporte en outre des perforations l2, l3, l4, dont une (l2) dans l'âme $5_c$ du profilé en U et au moins une autre (l3, l4) dans la patte ll.

Le montage s'exécute conformément aux figures lO à l3 sans outillage spécial. Une simple tige telle un tournevis l5 introduit dans la perforation l2 de l'âme 5c et celle l3 ou l4 de la patte ll permet de faire levier sur celle-ci et de faciliter l'engagement.

L'ensemble des opérations peut aussi se réaliser à l'aide d'un simple marteau.

Un trou central 9 permet avantageusement la pose d'un éventuel boulon renforçant le montage de l'éclisse 5 sur les extrémités des structures à raccorder.

Ce type d'éclisse 5 peut se poser chaque fois que des fils parallèles à l'axe des structures se raccordent, et ce aussi bien sur les côtés verticaux que sur le fond des dites structures.

Les mailles secondaires $M_4$ assimilables à des trous (figure 3) permettent avantageusement des fixations par boulonnerie du commerce l8, (figures l4 à l7). Une suspente plafond peut alors se réaliser par une simple tige filetée l6, emprisonnant la structure entre deux écrous et rondelles l7.

La structure offre de nombreuses autres possibilités telles que:

- figure l9, la fixation par simple boulonnage l8 d'une cornière l9 de séparation des cables parcourus par des courants forts de ceux parcourus par des courants faibles,
- figure 2O, la fixation d'un ensemble de cables 2l par collier à talon 2O à accés direct ce qui amène une économie de pose.

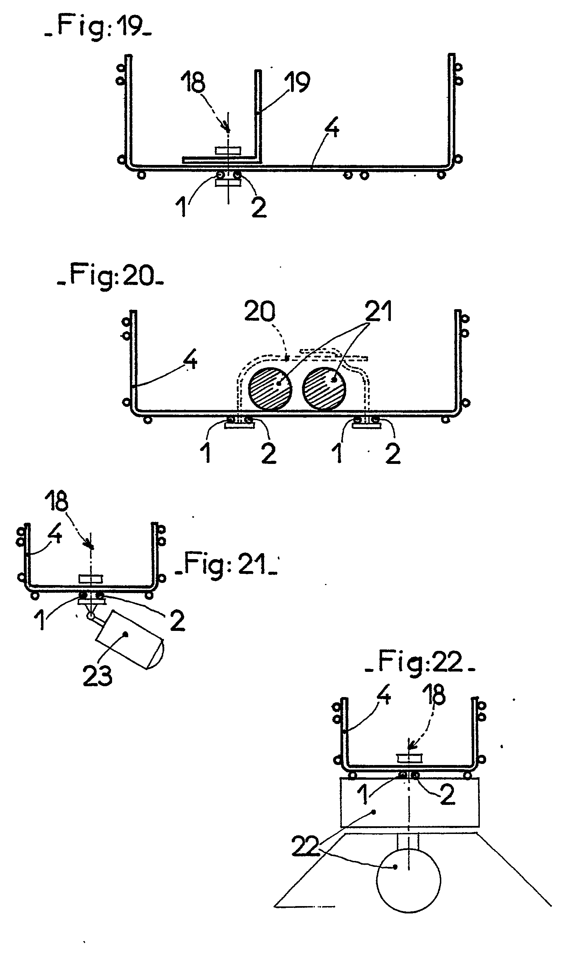

- figures 2l, 22, grâce à son autoportance, le supportage tant de cables et canalisations que d'accessoires tels que rampe d'éclairage 22, haut parleur 23 ou caméra vidéo etc ... fixés par boulonnerie du commerce l8.

Les structures selon l'invention, sont réalisables à partir d'une nappe maillée par simple cisaillage pliage, ce qui amène une grande flexibilité de fabrication.

Leur fixation et leur supportage peuvent se réaliser sans aucune pièce spécifique, en utilisant de la boulonnerie standard.

A la flexibilité de fabrication s'ajoute une grande flexibilité d'utilisation qui permet l'emploi de ce type de structure pour l'équipement d'ensembles tertiaires comportant des distributions d'energie de plus en plus complexes, électricité courant fort, courant faible, téléphones, cables coaxiaux informatiques, télex, réseaux câblés, etc...

Les modifications dans le temps sont faciles et ne nécessitent jamais d'outillage spécial.

Les structures démontés sont entièrement récupérables.

La continuité de terre est assurée par la nappe maillée lorsqu'elle est métallique.

L'invention est néanmoins applicable pour des nappes en d'autres matériaux et notamment en matériaux de la famille des plastiques et composites.

Les structures peuvent supporter des canalisations souples genre tubes liaison énergie pneumatique, hydraulique.

L'optimisation des coûts de pose est constamment réalisable sans étude importante.

## Revendications

l. Structure de supportage et de guidage de cables électriques, cables bus informatique, réseaux cablés, fibres optiques et toutes canalisations souples ou similaires, cette structure du type gouttière ou goulotte appelée couramment chemin ou échelle à cables étant réalisée à partir d'une nappe de préférence métallique constituée de fils (l, 2) disposés longitudinalement appelés fils de chaîne qui ont en section une certaine dimension transversale ($D_C$) auxquels sont ajoutés orthogonalement, par exemple par superposition, et assemblés à chaque intersection, par exemple par soudage des fils (3, 4) disposés transversalement appelés fils de trame qui ont en section une certaine dimension ($D_T$),

lesquels fils ont une section qui peut être circulaire ou de tout autre forme,

Cette structure étant CARACTERISEE en ce que les fils de chaine et les fils de trame sont répartis dans la nappe de manière telle que la nappe qui constitue la structure :
- d'une part, présente des mailles principales ($M_1$) qui sont délimitées de chaque côté par un groupe de deux fils délimitant entre eux des mailles secondaires ($M_2$, $M_3$, $M_4$) et,
- d'autre part, respecte une certaine modularité longitudinale et transversale, et enfin,
  - possède, pour une même nappe maillée :
    . des dimensions des fils de chaine et de trame ($D_C$ et $D_T$),
    . des entraxes ($C_1$, $C_2$) de fils de chaine et ($T_1$, $T_2$) de fils de trame et donc,
    . des modules de chaine (C) et de trame (T), qui sont parfaitement définis et constants.

2. Structure selon la revendication l obtenue par cisaillage dans la nappe d'un flan et pliage de celui-ci selon les profil et section souhaités, CARACTERISEE en ce que la nappe est cisaillée au long des fils, soit de chaine (l ou 2), soit de trame (3 ou 4) mais de manière que la largeur du flan corresponde, selon le sens de ces mailles, à plusieurs fois le module, dans le sens considéré, majoré d'une fois l'écartement ($T_1$) ou ($C_1$) des fils délimitant, dans le sens considéré, les mailles secondaires ($M_4$), afin de préserver sur les bords longitudinaux des flans et donc des structures les doubles fils et donc les mailles secondaires ($M_4$) favorisant la fixation des dites structures.

3. Structure selon la revendication l ou 2 obtenue par pliage selon au moins une certaine trace d'un flan découpé dans la nappe, CARACTERISEE en ce que la trace de pliage est positionnée entre les fils délimitant des mailles qu'elles soient secondaires ($M_4$) ou principales ($M_1$).

4. Structure selon la revendication 3 CARACTERISEE en ce que la trace est positionnée sur l'axe de ces mailles.

5. Structure selon l'une quelconque des revendications I à 4 CARACTERISEE en ce que en vue de leur assemblage bout à bout pour réaliser une structure plus importante, chaque structure a son extrémité transversale coupée de manière à éviter la présence des mailles secondaires afin que le raccordement se fasse, sans superposition, en alignant une extrémité avec l'autre et en les assemblant à l'aide d'éclisses (5) parallèles à la direction longitudinale de la structure.

6. Structure selon la revendication 5 CARACTERISEE en ce que l'éclisse (5) a un profil transversal en U permettant à ses ailes (5a, 5b) d'assurer, par élasticité l'emprisonnement des fils de chaine (I et 2) délimitant les mailles secondaires et qui, sur les structures élémentaires à assembler, sont dans le prolongement les unes des autres.

7. Structure selon la revendication 6 CARACTERISEE en ce que l'éclisse (5) comporte dans ses ailes (5a, 5b )un grugeage central (8) permettant le contournement et l'emprisonnement des fils d'extrémité (3, 4) des structures à raccorder.

8. Structure selon la revendication 7 CARACTERISEE en ce que ce grugeage préserve une hauteur des ailes (5a, 5b) suffisante pour leur conserver une bonne rigidité.

9. Structure selon l'une quelconque des revendications 6 à 8 CARACTERISEE en ce que l'éclisse (5) comporte également à chaque extrémité de ses ailes (5a, 5b) un grugeage (6) qui dégage le passage des fils respectifs de trame (3, 4) délimitant le bord opposé des mailles principales (M₁) des extrémités des structures à raccorder, l'âme (5c) de l'éclisse se poursuivant à chaque extrémité pour former d'un côté une patte arrondie (IO) qui permet d'emprisonner un fil de trame (3) et de l'autre côté une patte (II) qui, avant montage, est provisoirement rabattue et qui, après mise en place de l'éclisse, pourra être relevée afin de permettre l'emprisonnement du fil de trame (4) correspondant.

IO. Structure selon la revendication 9 CARACTERISEE en ce que du côté de la patte (II) rabattue, l'éclisse (5) présente des perforations (I2, I3, I4) dont une (I2) dans l'âme du profilé en U et au moins une autre (I3, I4) dans la patte (II) de manière à pouvoir loger dans la perforation (I2) de l'âme (5c) et celle (I3 ou I4) de la patte (II) une simple tige (I5) permettant de faire levier sur celle-ci et d'en faciliter l'engagement.

## Claims

1. A structure for supporting and guiding electric cables, electronic bus cables, cabled networks, fibreoptics and all flexible lines or the like, this structure of the gutter or gullet type, currently called a cable path or ladder, being manufactured from a fabric, preferably of metal, formed of threads (1, 2) arranged longitudinally called warp threads, which have a certain transverse dimension ($D_C$) in section and to which are connected at right angles, e.g. by overlapping, and joined at each intersection, e.g. by welding the threads (3, 4) arranged transversely called weft threads, which have a certain dimension ($D_T$) in section and which may have a circular or differently shaped cross-section, this structure being characterised in that the warp threads and the weft threads are distributed in the fabric in such a manner that the fabric which constitutes the structure:
 – on the one hand has main holes ($M_1$) defined on both sides by a group of two threads defining between them secondary holes ($M_2$, $M_3$, $M_4$) and,
 – on the other hand follows a certain longitudinal and transverse modularity, and finally
 – has, for the same fabric:
  a) dimensions ($D_C$ and $D_T$) for the warp threads and weft threads,
  b) pitches ($C_1$, $C_2$) for warp threads amd ($T_1$, $T_2$) for weft threads and thus,
  c) warp (C) and weft (T) modules
 which are perfectly defined and constant.

2. A structure according to claim 1 obtained by cutting out a panel from the fabric and folding the latter according to the desired profile and section, characterised in that the fabric is cut out along the threads, whether warp (1 or 2) or weft (3 or 4) but in such a manner that the width of the panel corresponds, according to the direction of these holes, to several times the module in the direction concerned plus the distance ($T_1$) or ($C_1$) of the treads defining, in the direction concerned, the secondary holes ($M_4$), in order to preserve on the longitudinal edges of the panels, and hence of the structures, the double threads, and hence the secondary holes ($M_4$), favouring the fixing of the said structures.

3. A structure according to claim 1 or 2 obtained by folding along at least a certain line of a panel cut out of the fabric, characterised in that the folding line is located between the threads defining the holes, whether these are secondary ($M_4$) or principal ($M_1$).

4. A structure according to claim 3, characterised in that the line is located on the axis of these holes.

5. A structure according to any one of claims 1 to 4, characterised in that due to their end-to-end assembly in order to give a larger structure, each structure, each structure has its transverse end cut in such a manner as to avoid the presence of secondary holes so that joining is effected, without overlapping, by aligning one end with another and by joining them by means of fishplates (5) parallel to the longitudinal direction of the structure.

6. A structure according to claim 5, characterised in that the fishplate (5) has a U-shaped transverse profile, permitting its flanges (5a, 5b) to ensure, by elasticity, that the warp threads (1 and 2) defining the secondary holes and which, on elementary structures to be assembled, are an extension of one another, are enclosed.

7. A structure according to claim 6, characterised in that the fishplate (5) comprises in its flanges (5a, 5b) a central notch (8), permitting the curvature and enclosure of the end threads (3, 4) of the structures to be joined.

8. A structure according to claim 7, characterised in that the notch has flanges (5a, 5b) of sufficient height for them to remain rigid.

9. A structure according to any one of claims 6 to 8, characterised in that the fishplate (5) also comprises at each end of its flanges (5a, 5b) a notch (6) which allows the passage of the respective weft threads (3, 4) defining the opposite edge of the principal holes (M₁) of the ends of the structures to be joined, the web (5c) of the fishplate continuing at each end so as to form on the one side a rounded hook (10), with which it is possible to enclose a weft thread (3), and on the other side a hook (11) which, before assembly, is provisionally bent back and which after mounting of the fishplate may be raised so as to permit the corresponding weft (4) to be enclosed.

10. A structure according to claim 9, characterised in that on the side of the bent back hook (11), the fishplate (5) has perforations (12, 13, 14), one (12) in the web of the U-shaped moulded member and at least one other (13, 14) in the hook (11), so as to be capable of being housed in the perforation (12) of the web (5c) and in the perforation (13 or 14) of the hook (11), a simple rod (15) acting as a lever on the said hook and simplifying the engagement.

**Patentansprüche**

1. Trage- und Führungsausbildung für elektrische Kabel, Informations-Kabel-Bus, Netzwerk-Kabeln, optischen Fasern und alle weichen oder dgl. Leitungen, wobei diese Ausbildung nach Art eines Kabelschachtes oder Rinne als sog. laufender Weg oder Kabeltreppe realisiert wird von einem vorzugsweise metallischen Mantel, der aus Drähten (1, 2) gebildet ist, die als sog. Kettdrähte in Längserstreckung angeordnet sind, die im Querschnitt eine gewisse Ausdehnung in Querrichtung (D_C) aufweisen, auf die rechtwinklig verlaufend, beispielsweise durch Übereinanderlagerung, Drähte (3, 4) hinzugefügt und die mit diesen in jedem Zwischenbereich beispielsweise durch Schweißen verbunden werden, welche Drähte querverlaufend angeordnet sind und Schußdraht genannt werden, die im Querschnitt eine gewisse Dimension (D_T) aufweisen, wobei die Drähte einen Querschnitt aufweisen, der kreisförmig oder in jeder anderen Form ausgebildet sein kann, dadurch gekennzeichnet, daß die Kettdrähte und die Schußdrähte in dem Mantel derart verteilt sind, daß der Mantel, der die Ausbildung bereitstellt:

– einerseits Hauptmaschen (M₁) aufweist, die an jeder Seite durch eine Gruppe von zwei Drähten begrenzt sind, die zwischen sich zweite Maschen (M₂, M₃, M₄) begrenzt und,

– andererseits ein längs- und querverlaufendes Bauprinzip einhält und schließlich

– für denselben mit Maschen versehenen Mantel besitzt:

· Ausdehnungen der Kettdrähte und der Schußdrähte (D_C, D_T),

· Mittenabstände (C₁, C₂) der Kettdrähte und (T₁, T₂) der Schußdrähte und infolgedessen

· Kettenmodule (C) und Schußmodule (T), die vollständig definiert und konstant sind.

2. Ausbildung nach Anspruch 1, die durch Scherschneiden eines Abschnittes in dem Mantel und Faltung desselben gemäß dem gewünschten Profil und Querschnitt erhalten wird, dadurch gekennzeichnet, daß der Mantel längs der Drähte entweder der Kettdrähte (1 oder 2) oder der Schußdrähte (3, 4) geschnitten wird, aber dergestalt, daß die Größe des Abschnittes in der Richtung dieser Maschen mehrere Male dem Modul in der betrachteten Richtung entspricht, einmal um den Zwischenraum (T₁) oder (C₁) der Drähte vergrößert, welche in der betrachteten Richtung die zweiten Maschen (M₄) begrenzen, damit an den Längsrändern des Abschnittes und infolgedessen die Ausbildung der doppelten Drähte sowie die zweiten Maschen (M₄) bewahrt werden, die die Festlegung besagter Ausbildungen begünstigen.

3. Ausbildung nach Anspruch 1 oder 2, erhalten nach dem Falten gemäß zumindest einer vorgegebenen Spur eines in dem Mantel abgeschnittenen Abschnittes, dadurch gekennzeichnet, daß die Faltspur zwischen den die Maschen begrenzenden Drähten angeordnet ist, und zwar entweder zwischen den zweiten Maschen (M₄) oder den Hauptmaschen (M₁).

4. Ausbildung nach Anspruch 3, dadurch gekennzeichnet, daß die Spur auf der Achse der Maschen angeordnet ist.

5. Ausbildung nach einem der Ansprüche 1 bis 4, dadurch gekennzeichnet, daß mit Hinblick auf ihre Montage aneinander zur Verwirklichung sehr großer Ausbildungen jede Ausbildung an ihrer querverlaufenden Seite dergestalt geschnitten ist, daß das Vorliegen von zweiten Maschen verhindert wird, damit die Verbindung sich ohne Übereinanderlagerung gestaltet, wobei ein Ende mit dem anderen fluchtet und sie mit Hilfe von Laschen (5) montiert werden, die parallel zur Längsrichtung der Ausbildung verlaufen.

6. Ausbildung nach Anspruch 5, dadurch gekennzeichnet, daß die Lasche (5) im Querschnitt U-förmig ist und mit seinen Flügeln (5a, 5b) durch Elastizität das Gefangenhalten der Kettdrähte (1, 2) sicherzustellen gestattet, die die zweiten Maschen begrenzen und die an den zu montierenden elementaren Ausbildungen in Verlängerung zueinander angeordnet sind.

7. Ausbildung nach Anspruch 6, dadurch gekennzeichnet, daß die Lasche (5) an ihren Flügeln (5a, 5b) eine zentrale Nibbelung aufweist, die die Verwindung und das Festhalten der Drähte (3, 4) am äußeren Rand der zu verbindenden Ausbildungen gestattet.

8. Ausbildung nach Anspruch 7, dadurch gekennzeichnet, daß die Nibbelung für die Flügel (5a, 5b) eine ausreichende Höhe beläßt, um ihnen eine gute Steifigkeit zu bewahren.

9. Ausbildung nach einem der Ansprüche 6 bis 8, dadurch gekennzeichnet, daß die Lasche (5) in gleicher Weise an jedem Ende seiner Flügel (5a, 5b) eine Nibbelung (6) aufweist, die den Durchgang der jeweiligen Schußdrähte zuläßt, welche den entge-

gengesetzten Rand der Hauptmaschen ($M_1$) in der zu verbindenden Ausbildungen begrenzen, wobei der Steg ($5_c$) der Lasche sich an jeder Seite zur Bildung einer abgerundeten Klaue (10) an einer Seite, die einen Schußdraht (3) festzuhalten gestattet, und einer Klaue (11) auf der anderen Seite fortsetzt, die vor der Montage provisorisch umgeschlagen ist und die nach dem Instellungbringen der Lasche losgelassen werden kann, um das Festhalten des entsprechenden Schußdrahtes (4) zu gestatten.

10. Ausbildung nach Anspruch 9, dadurch gekennzeichnet, daß auf der Seite der umgebogenen Klaue (11) die Lasche (5) Perforationen (12, 13, 14) aufweist, von denen eine im U-förmigen Steg und zumindest eine andere (13, 14) in der Klaue (11) dergestalt angeordnet ist, um in der Perforation (12) des Steges ($5_c$) und jene (13, 14) der Klaue (11) eine einfache Stange (15) anzusetzen, die das Hebeln zuläßt und dabei den Eingriff erleichtert.

Fig.1

Fig:2

Fig:3

_Fig:4_

_Fig:5_

_Fig:6_

_Fig:7_

- Fig. 8 -

-Fig:9a-

-Fig:9b-

-Fig:9c-

- Fig:10 -

- Fig:11 -

- Fig:12 -

-Fig.13-

EP 0 229 544 B1

_Fig:14_

_Fig:15_

_Fig:16_

_Fig:17_

_Fig:18_

_Fig:19_

_Fig:20_

_Fig:21_

_Fig:22_